# EUROPÄISCHE PATENTANMELDUNG

(11) **EP 1 602 863 A1**
(43) Veröffentlichungstag der Anmeldung: **07.12.2005**
(21) Anmeldenummer: 05010697.0
(22) Anmeldetag: 18.05.2005
(51) Int. Cl.: F16H 63/36

(54) **Einrichtung zur Verriegelung und Neutralrastierung der Schaltschienen eines Handschaltgetriebes**

(30) Priorität: 05.06.2004 DE 102004027599
(71) Anmelder: ZF FRIEDRICHSHAFEN AG, 88038 Friedrichshafen (DE)
(72) Erfinder: Nitzschke, Rüdiger, 88085 Langenargen (DE); Ferenc, Mark, Budapest 1031 (HU)

(57) **Zusammenfassung**

Es wird eine Einrichtung zur Verriegelung und Neutralrastierung der Schaltschienen eines Handschaltgetriebes vorgeschlagen, bei der die Funktionen Verriegelung und Neutralrastierung mit denselben Bauteilen (7, 8, 9, 10, 11, 12, 13, 14, 15, 16, 17) realisierbar sind.

## Beschreibung

Die vorliegende Erfindung betrifft eine Einrichtung zur Verriegelung und Neutralrastierung der Schaltschienen eines Handschaltgetriebes gemäß dem Oberbegriff des Patentanspruchs 1.

Nach dem Stand der Technik werden bei Handschaltgetrieben, insbesondere bei Zahnräder-Wechselgetrieben Einrichtungen eingesetzt, welche gewährleisten, dass nur ein Gang eingelegt ist. Hierbei wird nur eine der zum Verschieben von Zahnrädern oder Schaltkupplungen mit Schaltgabeln oder Schaltschwingen in Verbindung stehenden Schaltschienen aus der Neutrallage heraus verschoben, während die übrigen Schaltschienen in der Neutrallage verriegelt werden. Zu diesem Zweck umfassen Verriegelungseinrichtungen nach dem Stand der Technik mit Rastnuten oder Bohrungen versehene Schaltschienen und quer dazu in Bohrungen im Getriebegehäuse angeordnete und unter Federkraft stehende Sperrkörper. Derartige Einrichtungen sind insbesondere für Getriebe geeignet, bei denen die Schaltschienen relativ nah zueinander und in einer Ebene angeordnet sind.

Aus der DE 3640416 A1 der Anmelderin ist eine Verriegelungseinrichtung für Schaltschienen (Schaltstangen) bekannt, die eine quer zu den Schaltschienen am Getriebegehäuse gehaltene Verriegelungsplatte umfasst, welche von der jeweils in die geschaltete Stellung gebrachten Schaltschiene begrenzt verschoben wird, wobei die anderen Schaltschienen in der Neutralstellung über Sperrkanten an der Verriegelungsplatte und Sperrnuten an den Schaltschienen verriegelt werden. Die Verriegelungsplatte weist ein in Richtung von mindestens vier Schaltschienen sich erstreckendes Langloch auf und ist um einen in dem Langloch angeordneten und am Getriebegehäuse befestigten Führungsbolzen verschiebbar und schwenkbar, wobei zu beiden Seiten je zwei Schaltschienen mit jeweils zwei Sperrkanten für jede Schaltschiene angeordnet sind.

Mittels dieser Einrichtung wird eine Verriegelung der an einer Schaltung nicht beteiligten Schaltschiene erzielt; um eine Neutralrastierung der Schaltschienen zu gewährleisten ist jedoch eine zusätzliche Einrichtung notwendig, so dass sich die Anzahl der benötigten Bauteile sowie die Komplexität erhöht.

Der vorliegenden Erfindung liegt die Aufgabe zugrunde, eine Einrichtung anzugeben, welche zur Verriegelung und zur Neutralrastierung der Schaltschienen eines Handschaltgetriebes geeignet ist.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird eine Einrichtung zur Verriegelung und Neutralrastierung der Schaltschienen eines Handschaltgetriebes vorgeschlagen, bei der die Schaltschienen jeweils eine Nut bzw. Kerbe aufweisen, in die in der Neutralposition miteinander in Wirkverbindung stehende Verriegelteile, umfassend Bolzen und Kugeln, durch die Kraft einer Rastierfeder spielbehaftet hineingedrückt werden. Die Verriegelung erfolgt dadurch, dass durch die Bewegung einer Schaltschiene das dieser Schaltschiene zugeordnete Verriegelteil gegen die Kraft der Rastierfeder aus der Nut bzw. Kerbe herausgedrückt wird, so dass alle anderen Verriegelteile spielfrei in den entsprechenden Nuten bzw. Kerben hineingedrückt bleiben. Auf diese Weise wird gewährleistet, dass jeweils nur ein Gang im Getriebe eingelegt werden kann.

Durch die erfindungsgemäße Konzeption werden die Funktionen Verriegelung und Neutralrastierung in vorteilhafter Weise mit den gleichen Bauteilen realisiert. Zudem ist die hier vorgestellte Einrichtung einfach aufgebaut und kostengünstig herstellbar.

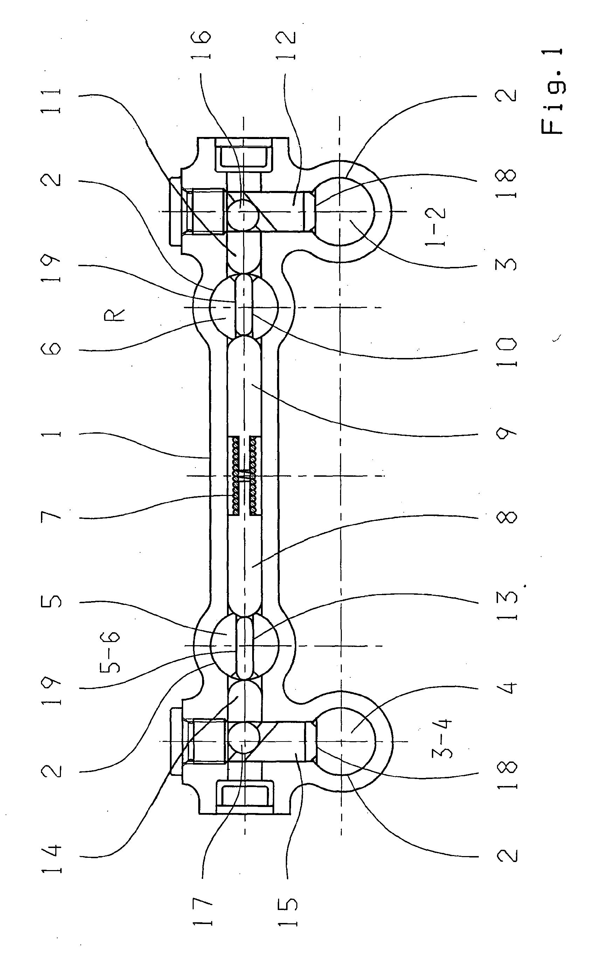

Im Folgenden wird die Erfindung anhand der beigefügten Figur, welche eine schematische Ansicht einer erfindungsgemäßen Einrichtung zur Verriegelung und Neutralrastierung der Schaltschienen darstellt, beispielhaft näher erläutert.

In der Figur ist eine erfindungsgemäße Einrichtung für ein Sechs-Gang-Getriebe dargestellt. Sie umfasst eine Halterung 1, welche Aufnahmen 2 zur Lagerung der Schaltschiene 3 der Gänge 1 und 2, der Schaltschiene 4 der Gänge 3 und 4, der Schaltschiene 5 der Gänge 5 und 6 und der Schaltschiene 6 zum Schalten des Rückwärtsganges aufweist.

Ferner weist die Halterung 1 Aufnahmen für eine Rastierfeder 7 sowie für die Verriegelteile, umfassend Bolzen 8, 9, 10, 11, 12, 13, 14, 15 und Kugeln 16 und 17 auf. Hierbei stehen die Verriegelteile miteinander in Wirkverbindung. Wie aus der Figur ersichtlich, weisen die Schaltschienen 3, 4 jeweils eine Nut 18 und die Schaltschienen 5, 6 eine Kerbe 19 auf, in die die Bolzen 12, 15 bzw. 10, 13 hineindrückbar sind, um eine axiale Bewegung der Schaltschienen zu verhindern.

Die Funktionsweise der erfindungsgemäßen Einrichtung ist folgende: In der Neutralposition (kein Gang geschaltet) werden die Bolzen 12, 15, 10 und 13 in die Kerben bzw. Nuten 18 bzw. 19 der Schaltschienen 3, 4, 5 und 6 durch die Kraft der Rastierfeder 7 spielbehaftet hineingedrückt, so dass ohne Krafteinwirkung kein Gang eingelegt werden kann. Hierbei wird die von der Rastierfeder 7 ausgehende Kraft auf die Bolzen 12 und 15 der Schaltschienen 3 bzw. 4 über die anderen Bolzen und die Kugeln 16 bzw. 17 übertragen. Zu diesem Zweck sind die den Schaltschienen 3, 4 abgewandten Seiten der Bolzen 12 bzw. 15 rampenförmig ausgebildet, so dass eine Bewegung einer Kugel in einer Bewegung des jeweiligen Bolzens resultiert und umgekehrt.

Die Verriegelung der an einer Schaltung nicht beteiligten Schaltschiene erfolgt gemäß der Erfindung dadurch, dass durch die Bewegung einer Schaltschiene der in dieser Schaltschiene eingreifende Bolzen gegen die Kraft der Rastierfeder aus der Nut bzw. Kerbe herausgedrückt wird, so dass alle anderen Verriegelteile spielfrei in den entsprechenden Nuten bzw. Kerben hineingedrückt bleiben. Beispielsweise bewirkt ein Schalten des dritten Ganges über die Schaltschiene 4 ein Herausdrücken des Bolzens 15 aus der Nut 18 und folglich eine Verschiebung der Kugel 17 in Richtung der Rastierfeder 7, wodurch alle an der Schaltung nicht beteiligten Verriegelteile nahezu spielfrei in den entsprechenden Nuten bzw. Kerben hineingedrückt bleiben. Auf diese Weise wird auf einfache Weise gewährleistet, dass jeweils nur ein Gang im Getriebe eingelegt werden kann.

### Bezugszeichen

- 1: Halterung
- 2: Aufnahme
- 3: Schaltschiene
- 4: Schaltschiene
- 5: Schaltschiene
- 6: Schaltschiene
- 7: Rastierfeder
- 8: Bolzen
- 9: Bolzen
- 10: Bolzen
- 11: Bolzen
- 12: Bolzen
- 13: Bolzen
- 14: Bolzen
- 15: Bolzen
- 16: Kugel
- 17: Kugel
- 18: Nut
- 19: Kerbe

## Patentansprüche

1. Einrichtung zur Verriegelung und Neutralrastierung der Schaltschienen eines Handschaltgetriebes, **dadurch gekennzeichnet, dass** die Funktionen Verriegelung und Neutralrastierung mit denselben Bauteilen (7, 8, 9, 10, 11, 12, 13, 14, 15, 16, 17) realisierbar sind.

2. Einrichtung zur Verriegelung und Neutralrastierung nach Anspruch 1, **dadurch gekennzeichnet, dass** sie in einer Halterung (1) angeordnete Verriegelteile aufweist, umfassend Bolzen (8, 9, 10, 11, 12, 13, 14, 15) und Kugeln (16, 17), wobei in der Neutralstellung des Getriebes jeweils ein Bolzen über die Kraft einer Rastierfeder (7) spielbehaftet in eine auf jeder Schaltschiene (3, 4, 5, 6) vorgesehene Nut (18) bzw. Kerbe (19) hineingedrückt wird, um die Neutralrastierung zu gewährleisten, wobei bei einer Schaltung das der für die Schaltung benötigten Schaltschiene zugeordnete Verriegelteil durch die Bewegung der Schaltschiene aus der Nut bzw. Kerbe gegen die Kraft der Rastierfeder herausgedrückt wird, wodurch die übrigen den anderen Schaltschienen zugeordneten Verriegelteile in den Nuten bzw. Kerben der anderen Schaltschienen spielfrei hineingedrückt bleiben.

3. Einrichtung zur Verriegelung und Neutralrastierung nach Anspruch 1 oder 2, **dadurch gekennzeichnet, dass** die Verriegelteile (8, 9, 10, 11, 12, 13, 14, 15, 16, 17) miteinander in Wirkverbindung stehen.

4. Einrichtung zur Verriegelung und Neutralrastierung nach Anspruch 1, 2 oder 3, **dadurch gekennzeichnet, dass** die Verriegelteile (8, 9, 10, 11, 12, 13, 14, 15, 16, 17) und die Rastierfeder (6) in einer Halterung (1) angeordnet sind.

5. Einrichtung zur Verriegelung und Neutralrastierung nach einem der vorangehenden Ansprüche, **dadurch gekennzeichnet, dass** die Halterung (1) Aufnahmen (2) zur Lagerung der Schaltschienen (3, 4, 5, 6) des Getriebes aufweist.
